# EUROPÄISCHE PATENTSCHRIFT

(11) **EP 2 966 998 B1**
(45) Veröffentlichungstag und Bekanntmachung des Hinweises auf die Patenterteilung: **26.01.2022**
(21) Anmeldenummer: 14717660.6
(22) Anmeldetag: 06.03.2014
(51) Int. Cl.: A01K 5/01

(54) **PFERDEBOXENWAND MIT EINER PFERDEFÜTTERVORRICHTUNG, UND VERFAHREN ZUM FÜTTERN EINES PFERDES**
WALL FOR A HORSE'S BOX WITH HORSE FEEDER, AND METHOD FOR FEEDING A HORSE
PAROI DE BOX POUR CHEVAL AVEC MANGEOIRE POUR CHEVAUX, ET PROCÉDÉ DE NOURRISSAGE DE CHEVAUX

(30) Priorität: 14.03.2013 DE 102013004355; 28.03.2013 DE 102013005357
(43) Veröffentlichungstag der Anmeldung: 20.01.2016
(73) Patentinhaber: Haupt, Anja, 52385 Nideggen (DE)
(72) Erfinder: Haupt, Anja, 52385 Nideggen (DE)
(74) Vertreter: Castell, Klaus
(86) Internationale Anmeldenummer: PCT/DE2014/000092
(87) Internationale Veröffentlichungsnummer: WO 2014/139495

(56) Entgegenhaltungen:
- GB-A- 2 415 592
- GB-A- 2 492 656
- US-A- 5 377 620
- US-A- 5 908 007
- US-A- 6 055 933
- US-A1- 2007 044 724
- US-A1- 2010 018 467

## Beschreibung

Die Erfindung betrifft eine Pferdeboxenwand mit einer Pferdefüttervorrichtung, insbesondere eine Heuraufe, sowie ein Verfahren zum Füttern eines Pferdes.

Pferde sind ursprünglich Steppentiere. Infolge dessen sind sie im Verdauungstrakt darauf eingerichtet, über lange Zeiten hinweg immer wieder kleine Nahrungsmengen zu sich zu nehmen. Vereinzelte große Mahlzeiten mit großen zeitlichen Abständen sind demgegenüber nicht nur unnatürlich für ein Pferd, sondern sogar hochgefährlich. Im Magen können sich Koliken bilden. Koliken sind eine der häufigsten Todesursachen für auch heute in Ställen gehaltene Pferde.

Als Pferdefutter wird üblicherweise Heu verwendet. Zusätzlich wird üblicherweise Kraftfutter verfüttert. Die nachstehenden Überlegungen beziehen sich - auch wenn zum Vereinfachen des Lesens meist nur von Heu die Rede ist - auf sämtliche Arten von Futter, vornehmlich aber Heu und Stroh, weil Heu und Stroh das meistverfütterte Pferdefutter darstellen.

Im Stand der Technik sind Heuraufen bekannt. Eine Heuraufe weist ein Volumen auf, welches mit Heu gefüllt werden kann. Das Pferd hat zu dem mit Heu gefüllten Volumen keinen beliebigen Zugriff. Vielmehr ist das mit Heu gefüllte Volumen aus Sicht des Pferdes jenseits eines Drahtgitters angeordnet, oder jenseits von Drahtstäben oder zum Beispiel hinter einem Netz. Das Pferd muss deshalb das Heu durch kleine Öffnungen hindurch zu sich herausrupfen. Es kann nur das herausgerupfte Futter letztendlich fressen.

Eine Heuraufe wird in der Praxis meist mindestens dreimal am Tag befüllt, nämlich morgens, mittags und abends.

Eine gattungsgemäße Pferdefütterungsvorrichtung ist aus der US 5 377 620 A bekannt. Eine derartige Füttervorrichtung hat einen Fressbereich, in dem das Pferd an das Futter herankommt und einen Vorhaltebereich, der so abgedeckt ist, dass das Pferd nicht daraus fressen kann. Diese Vorrichtung muss nicht so häufig befüllt werden. Zum Befüllen muss jedoch der Stall betreten werden und daher ist das Befüllen mit erhöhtem Aufwand verbunden.

Eine gattungsgemäße Pferdeboxenwand mit einer Pferdefüttervorrichtung ist aus der US 2010/018467 A1 bekannt.

Der Erfindung liegt die Aufgabe zugrunde, dem Stand der Technik eine Alternative oder eine Verbesserung zur Verfügung zu stellen.

Diese Aufgabe löst eine Pferdeboxenwand mit einer Pferdefüttervorrichtung gemäß Anspruch 1.

Begrifflich sei folgendes erläutert: Als ein "Volumen" sei ein zum Befüllen zur Verfügung stehender Raumbereich verstanden. Das Volumen muss nicht konstantes Ausmaß haben. So muss ein Volumen im hier angesprochenen Sinne nicht zwangsläufig starre Wände haben, sondern kann beispielsweise auch vollständig oder zum Teil mit einem labilen Netz begrenzt sein.

Der "Fressbereich" ist derjenige Bereich, welcher dem Pferd zum Zugriff zur Verfügung steht, wenn auch beispielsweise durch einen Fressmengenbegrenzer wie ein Gitterstab, ein Gitternetz oder ein Netz. So liegt beispielsweise das gesamte Volumen der Heuraufe aus dem Stand der Technik im Fressbereich, auch wenn das Pferd naturgemäß bei mit Heu gefülltem Volumen in der Heuraufe nicht an jeden Volumenpunkt gelangen kann, sondern beispielsweise nur an den Bereich direkt hinter den Gitterstäben, dem Gitternetz oder dem labilen Netz.

Entscheidend ist aber, dass das Pferd durch geschicktes Rupfen von Heu auch durch den Futterbegrenzer hindurch an zumindest im Wesentlichen sämtliches Heu gelangen kann, welches im Volumen vorgehalten ist, wenn dieses Volumen im Fressbereich liegt.

Der "Vorhaltebereich" soll den Gegenspieler zum Fressbereich bilden: der Vorhaltebereich ist ein Raumabschnitt, an welchen das Pferd nicht gelangt oder ihn jedenfalls nicht leeren kann, selbst wenn das Pferd auf den Fressbereich und das darin befindliche Volumen der Pferdefüttervorrichtung Zugriff hat. Dies ist mit der "stabilen Getrenntheit" gemeint. Es soll eine mechanische Trennung sicherstellen, dass das Pferd an Futter in einem Volumen nicht gelangt, wenn jenes Volumen im Vorhaltebereich befindlich ist.

Der Fressbereich der Pferdefüttervorrichtung liegt an einer Wand einer Pferdebox auf der Innenseite zum Boxeninneren hin; der Vorhaltebereich hingegen liegt nach außen von der Box weg gerichtet und beispielsweise im Boxengang, wenn mehrere Boxen nebeneinander angeordnet sind.

Es sei darauf hingewiesen, dass der Fressbereich und der Vorhaltebereich keine statischen Grenzen haben müssen. Vielmehr kann auch beispielsweise daran gedacht sein, dass im Laufe des Fütterns Teile des Vorhaltebereichs, also des für das Pferd nichterreichbaren Bereichs, zum Fressbereich gemacht werden, also zum für das Pferd erreichbaren Bereich.

Die "Transporteinrichtung" kann verschiedenster Art sein: sie muss insbesondere nicht über einen Motor angetrieben sein, kann aber einen Motor aufweisen. Beispielsweise kann ein Gestänge oder eine irgendwie anders geartete mechanische Kopplung oder schon eine mechanische Einwirkungskraft auf nur mindestens eines der angesprochenen Volumina ausreichend sein. Zudem reicht ein manueller Antrieb aus.

Die vorgestellte Erfindung ermöglicht es vorteilhafterweise, dass ein Pferd mit einfachen Mitteln seine Futtermenge nur peu à peu gelangt, nämlich immer nur an dasjenige Futter, welches gerade im Fressbereich liegt. Aus Sicht der Person, welche das Futter vorbereitet, gelangt das Pferd also immer nur an dasjenige Futter, welches in demjenigen Volumen angeordnet ist, welches gerade in den Fressbereich hineinbewegt wurde bzw. zum Fressbereich gemacht wurde, wobei letzteres auch unter die erstgenannte Formulierung fallen soll.

In einer bevorzugten Ausführungsform ist die Transporteinrichtung dazu eingerichtet, das erste Volumen aus dem Fressbereich hinaus zu bewegen, insbesondere in den Vorhaltebereich hinein.

Es wurde bereits erläutert, dass die für ein Pferd ideale Ernährung aus immer wieder kleinen Mahlzeiten über einen längeren Zeitraum besteht. Im Idealfall ist also das erste Volumen bereits leer gefressen, wenn das zweite Volumen in den Fressbereich hineinbewegt wird. Die Vorrichtung kann sehr platzsparend bauen, wenn das erste Volumen aus dem Fressbereich hinausbewegt wird. Außerdem lässt sich die Vorrichtung besser reinigen und auch wieder neu befüllen, wenn sie im Vorhaltebereich liegt. Denn der Vorhaltebereich ist bevorzugt mit einem freien Zugriff von einer Bedienerseite aus gestaltet. Die Erfindung sieht vor, dass die Transporteinrichtung dazu eingerichtet ist, das zweite Volumen nach der Bewegung in den Fressbereich hinein auch aus dem Fressbereich hinaus zu bewegen, insbesondere in den Vorhaltebereich hinein.

Eine dermaßen gestaltete Transporteinrichtung kann also das zweite Volumen nach der Bewegung in den Fressbereich hinein entweder auf derselben Strecke wieder zurück bewegen oder auf einer Fortführung der Strecke und somit auf einer anderen Strecke weiterbewegen. Der Gedanke in beiden Fällen ist es, auch das zweite Volumen wieder in eine Position zu bekommen, in welcher es dem Zugriff des Pferdes entzogen ist und beispielsweise gereinigt oder neu mit Futter befüllt werden kann.

Es sei an dieser Stelle angemerkt, dass im Rahmen der hier vorliegenden Patentanmeldung jedwede unbestimmte Zahlenangabe wie "ein", "zwei" usw. jeweils als eine mindestens-Angabe zu verstehen ist, also als "mindestens ein ...", "mindestens zwei ..." usw., sofern sich nicht aus dem jeweiligen Kontext etwa ergibt, dass dort gerade nur "genau ein ...", "genau zwei ..." usw. gemeint sein soll.

In einer analogen Betrachtung sei ausdrücklich betont, dass im Rahmen der hier vorliegenden Patentanmeldung und vor allem der Patentansprüche zwar primär von einem "ersten" und einem "zweiten" Volumen gesprochen wird, dass aber die Erfindung nicht auf eine Vorrichtung mit nur genau zwei Volumina eingeschränkt ist. Vielmehr sei die Erfindung so zu verstehen, dass mindestens zwei Kammern vorhanden sein sollen. Je größer die Anzahl der Kammern ist, desto feinstufiger kann der zeitliche Ablauf in der Futterzufuhr für das Pferd gesteuert werden und/oder desto genauer kann auch eine Variation in der Art des Futterfüllers Pferd gesteuert werden, weil beispielsweise verschiedene Kammern mit verschiedenem Futter oder verschiedenen Futtermischungen gefüllt sein können.

Eine sehr kostengünstig und robust ausführbare Ausführungsform der Erfindung sieht vor, dass die Transporteinrichtung dazu eingerichtet ist, das erste Volumen gleichzeitig mit dem zweiten Volumen zu bewegen. Bei einer geschickten Ausführung ist es dann möglich, das zweite Volumen in den Fressbereich hinein zu bewegen, während gleichzeitig das erste Volumen aus dem Fressbereich hinausbefördert wird, und zwar bevorzugt in den Vorhaltebereich hinein. Der Fressbereich kann dann mit geometrisch kleinen Abmessungen geschaffen werden. So kann beispielsweise ein Schlitz oder eine anderweitige relativ kleine Öffnung in einer Pferdeboxenwand schon ausreichen, dass die Pferdefüttervorrichtung immer das jeweils gerade gewünschte Volumen in den Fressbereich hineinbewegt, gleichzeitig aber andere Volumina aus dem Fressbereich hinausbewegt.

Bevorzugt sind das erste Volumen und das zweite Volumen mechanisch gegeneinander fixiert. Auf diese Weise kann die Transporteinrichtung an einer beliebigen Stelle am ersten oder am zweiten Volumen mechanisch angreifen und gleichzeitig beide Volumina bewegen.

Derselbe Gedanke gilt auch für weitere Volumina. In einer bevorzugten Ausführungsform sind alle hier relevanten Futtervolumina mechanisch gegeneinander fixiert. Sie können beispielsweise eine gemeinsame Grundplatte oder eine andere gemeinsame mechanische Platte, Scheibe oder ein anderes mechanisches Element aufweisen. Die bislang bevorzugte Ausführungsform der Erfinder sieht eine gemeinsame runde Grundplatte vor.

Es wurde bereits erläutert, dass bevorzugt nicht nur zwei Volumina für Futter vorgesehen sind, sondern beispielsweise ein drittes Volumen vorgesehen ist, welches in der Ursprungsstellung ebenfalls im Vorhaltebereich angeordnet ist, wenn das erste Volumen also im Fressbereich angeordnet ist. Bei einer solchen Konstellation sind während der zur Verfügungstellung des Futters im ersten Volumen im Fressbereich schon mindestens zwei Volumina im Vorhaltebereich angeordnet. Somit entständen insgesamt mindestens drei Kammern, in denen verschiedene Mengen, verschiedene Portionen mit gleichen Mengen und/oder verschiedene Futterarten oder Futterartenmischungen vorgesehen sein können. Beispielsweise lässt sich morgens die Pferdefüttervorrichtung in ihren drei Kammern mit Heu befüllen. Es wird dann für den Vormittag das erste Volumen in den Fressbereich hineinbewegt. Später, beispielsweise am Mittag oder frühen Nachmittag, wird das zweite Volumen in den Fressbereich hineinbewegt; gegen Abend wird das dritte Volumen in den Fressbereich hineinbewegt.

In einer konstruktiv sehr günstigen und platzsparenden Ausführungsform sind die Volumina in einer Trommel angeordnet, insbesondere mit radial angeordneten Trennwänden. Als eine Trommel sei ein Bauelement verstanden, welches eine nicht zwingend durchlaufende Mantelfläche aufweist, welches aber mit einer beispielsweise vertikal oder horizontal angeordneten Drehachse lagerbar ist. Der Umfang muss nicht zwingend kreisrund sein, ist aber bevorzugt zumindest im Wesentlichen rund oder jedenfalls vieleckig. Bei einer radialen Aufteilung des Gesamtvolumens der Trommel in die verschiedenen Volumina zur Nutzung gemäß der hier vorliegenden Erfindung muss die Trommel einfach nur um ihre Drehachse gedreht werden, und es wird ein bislang im Vorhaltebereich angeordnetes Volumen in den Fressbereich hineinbewegt, während gleichzeitig bei geeigneter Gestaltung immer nur ein oder beispielsweise zwei Volumina im Fressbereich angeordnet sind und anschließend wieder in den Vorhaltebereich wandern und sich somit dem Pferd entziehen.

Die Drehlagerung mit einer Achse ist nicht nur auf eine Trommel eingeschränkt vorteilhaft, sondern generell dann, wenn die Volumina drehbar in der Pferdefüttervorrichtung gehalten sind.

Um den Effekt einer Heuraufe zu erzielen, dass also das Pferd nur langsam durch Rupfen des Heus durch kleine Öffnungen fressen kann, wird vorgeschlagen, dass die Volumina von einem Netz oder Gitter umgeben oder jedenfalls zu einer Außenseite hin geschützt sind. In der Praxis wird man ein solches Netz oder Gitter an derjenigen Seite des Volumens anordnen, auf welcher sich letztendlich das Pferd befinden wird. Beispielsweise beim Vorsehen der vorstehend erwähnten Trommel wird das Netz oder Gitter im Wesentlichen die Mantelfläche bilden.

Es kann eine Zugabeeinrichtung vorgesehen sein, bevorzugt mit einem Zugabespeicher. Es wurde bereits erwähnt, dass Pferde nicht nur Heu fressen. Manchmal macht es Sinn, eine Zugabe ebenfalls zu verabreichen. Diese kann beispielsweise in einem Anteil Kraftfutter liegen, oder es können beispielsweise Medikamente zu verabreichen sein. Die hier erwähnte Zugabeeinrichtung ist dazu eingerichtet, eine Zugabe in eines oder in mehrere der Volumina hinein zu geben. Beispielsweise kann die Zugabeeinrichtung oberhalb eines bestimmten Volumens sein oder an einer Stelle angeordnet, unter welcher sich die Volumina hindurchbewegen. Die Zugabeeinrichtung kann dann aus dem Zugabespeicher die Zugabe herausnehmen und in das jeweils unter ihr befindliche Volumen abgeben, beispielsweise einfach hineinfallen lassen oder hineinsprenkeln.

Die Zugabeeinrichtung ist bevorzugt im Vorhaltebereich der Pferdefüttervorrichtung angeordnet.

Erfindungsgemäß ist eine Pferdefüttervorrichtung wie vorstehend beschrieben in einer Pferdeboxenwand angeordnet. Der Vorteil der Pferdefüttervorrichtung strahlt dann unmittelbar auf die Pferdeboxenwand aus.

In analoger Betrachtung werden eine gesamte Pferdebox, eine Pferdeboxenanlage oder ein Pferdestall jeweils auch vorteilhaft modifiziert, wenn sie mit den Pferdefüttervorrichtungen wie vorstehend beschrieben ausgerüstet sind.

In diesem Sinne sei als eine Pferdebox eine Einrichtung mit einem Stellplatz für ein Pferd oder für eine Mehrzahl Pferde verstanden. Eine Pferdebox hat mindestens zwei eigene Wände, wenn sie in einer Gebäudeecke angeordnet ist. Im Regelfall hat sie allerdings mindestens drei Wände, wenn sie an einer Gebäudeaußenwand angeordnet ist. Eine Pferdebox kann auch vier eigene Wände haben.

Pferdeboxen werden üblicherweise benachbart zueinander angeordnet, sodass sich jede Pferdebox mit ihrem jeweiligen rechten und linken Nachbarn jeweils eine Wand teilt.

Als eine Pferdeboxenanlage sei die Gesamtheit der zueinander in einem räumlichen Verhältnis stehenden Pferdeboxen verstanden, beispielsweise in einem Gebäude. Das Gebäude kann insbesondere ein Pferdestall sein, wobei der Pferdestall noch weitere Einrichtungen aufweisen wird, wie beispielsweise zur Reinigung und anderweitigen Pflege der Pferde oder von Reitmaterial.

Bevorzugt weist bei einer Mehrzahl Pferdeboxen jede einzelne der Pferdeboxen oder zumindest eine Mehrzahl der Pferdeboxen eine Pferdefüttervorrichtung wie vorstehend beschrieben auf.

Die gestellte Aufgabe löst ebenfalls ein Verfahren zum Füttern eines Pferdes gemäß Anspruch 10.

Es versteht sich, dass eine Pferdefüttervorrichtung wie vorstehend beschrieben nicht zwingend auf eine bereits vorhandene Wand wie beispielsweise eine Wand der Pferdebox zurückgreifen muss. Vielmehr ist auch eine freistehende Variante denkbar, nicht gemäß der vorliegenden Erfindung, sodass die Pferdefüttervorrichtung direkt innerhalb der Pferdebox aufgestellt werden kann. In diesem Fall ist eine dichtende Ummantelung sinnvoll, sodass der Vorhaltebereich innerhalb eines ummantelten Bereichs liegt. Idealerweise ist der Mantel zylinderförmig, wenn die einzelnen Volumina an einer runden oder mehreckigen Trommel angeordnet sind.

Im Übrigen versteht sich, dass nicht zwingend immer nur ein Volumen in den Fressbereich hineinbewegt werden darf. Vielmehr können auch mehrere Volumina gleichzeitig in den Fressbereich hineinbewegt werden oder jedenfalls gleichzeitig im Fressbereich liegen. So ist beispielsweise denkbar, dass immer ein Volumen für Heu und eines für Kraftfutter gleichzeitig dem Pferd im Fressbereich zur Verfügung steht.

Hinsichtlich des Werkstoffs sei insbesondere an Stahl, verzinkt oder unverzinkt, an Edelstahl, an Kupfer, an Aluminium, an Holz oder ein anderes Blech gedacht.

Ausdrücklich sei betont, dass eine elektrisch gesteuerte oder geregelte Antriebsvariante den Komfort bei der Fütterung des Pferdes weiter erhöhen kann.

Wenn die Pferdefüttervorrichtung über eine Datenaustauscheinrichtung verfügt, beispielsweise einen Netzwerkanschluss oder eine Datenfunkeinrichtung, dann kann das Weiterbewegen der Volumina beispielsweise über das Internet oder über ein Telefon erfolgen.

Beispielsweise lassen sich auch abhängig von der Witterung oder sogar von Wettervorhersagen oder beispielsweise von geplanten anstehenden Sportveranstaltungen für das Pferd die zeitlichen Abläufe beim Bewegen der Volumina in den Fressbereich und aus dem Fressbereich hinaus angepasst steuern.

Es sei betont, dass im Rahmen der hier vorliegenden Patentanmeldung der Begriff "Steuerung" als ein Oberbegriff zum "Regeln" verstanden wird. Wann immer von einer Steuerung die Rede ist, sei daher eine Steuerung oder sogar eine Regelung mitumfasst.

Die Erfindung wird nachstehend anhand eines Ausführungsbeispiels unter Bezugnahme auf die Zeichnungen näher erläutert. Dort zeigen
- Fig. 1: schematisch in einer räumlichen Ansicht eine Trommel mit drei als Volumina dienenden Kammern,
- Fig. 2: die Trommel aus Fig. 1 in einer Draufsicht gemäß Markierung II-II in Fig. 1,
- Fig. 3: die Trommel aus den Fig. 1 und Fig. 2 in einem Einbauzustand in einer Boxenwand,
- Fig. 4: die Trommel aus den Fig. 1 bis Fig. 3 mit einem Netz und
- Fig. 5: die Trommel aus den Fig. 1 bis Fig. 3 mit Gitterstäben.

Die Trommel 1 in den Figuren besteht im Wesentlichen aus einem Boden 2, der hier als kreisrundes Bodenblech ausgeführt ist, sowie aus drei Trennwänden 3, 4, 5, welche ausgehend von einer zentralen Achse 6 radial drei Kammern 7, 8, 9 in der Trommel 1 bilden.

An einem bei aufrechtstehender Trommel 1 oberen Ende 10 ist ein umgebender Ring 11 vorgesehen. Dieser läuft an den radial äußeren Enden der Wände 3, 4, 5 entlang.

An den radial äußeren Enden der Wände 3, 4, 5 ist jeweils ein Mantelstreifen 12 (exemplarisch gekennzeichnet) vorgesehen.

An einer Unterseite 13 der Trommel 1 ist ein ringförmiges Lager 14 für einen Lagerdorn vorgesehen.

Sämtliche dargestellten Teile der Trommel 1 sind bevorzugt miteinander befestigt und aus Blech gefertigt.

Für den Werkstoff werden verschiedenste Metalle bevorzugt. Beispielweise kann Edelstahl zum Einsatz kommen, oder ein bevorzugt beschichtetes oder anderweitig behandeltes anderes metallenes Material.

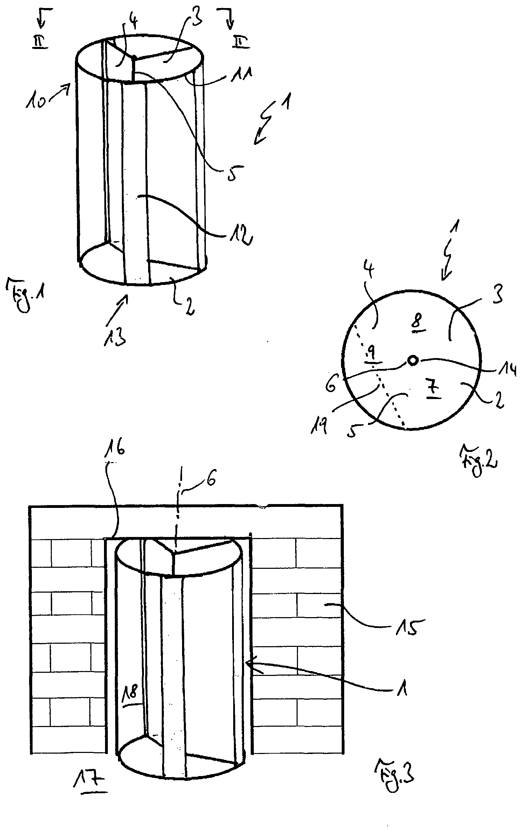

Wenn die Trommel mit aufrechtstehender Achse in eine Boxenwand 15 eingesetzt ist, hat die Boxenwand 15 idealerweise eine Ausnehmung 16 , welche mit der Größe der Trommel 1 so zusammenwirkt, dass immer nur eine der drei Kammern 7, 8, 9 auf einer Seite der Boxenwand 15 ist. In dem in Fig. 3 dargestellten Beispiel ist auf einer Seite eines Boxengangs 17 ein größerer Anteil der Trommel 1 angeordnet als in einem Pferdebereich 18 jenseits der Boxenwand 15.

Im Idealfall ist die Ausnehmung 16 nur wenig breiter als die Sehne 19 (siehe Fig. 2) zwischen den radial äußeren Enden zweier benachbarter Wände beträgt.

Bevorzugt ist diese Sehne mehrfach an der Trommel 1 in gleicher Länge vorhanden. Besonders bevorzugt ist es, wenn sämtliche Sehnen in sämtlichen Kammern 7, 8, 9 die gleiche Länge haben.

Die Trommel 1 ist nicht mittig mit ihrer zentralen Achse 6 in der Ebene der Boxenwand 15 angeordnet, sondern idealerweise mit der Sehne 19 zumindest im Wesentlichen bündig mit einer Rückseite 20 (nicht dargestellt) der Boxenwand 15, also derjenigen Seite der Boxenwand 15, welche zum Pferdebereich 18 gerichtet ist.

Im Betrieb der in der Boxenwand 15 eingesetzten Trommel 1 dient die Trommel 1 als Pferdefüttervorrichtung: die drei Kammern 7, 8, 9 stellen Volumina dar, welche jeweils mit demselben oder einem unterschiedlichen Futter gefüllt werden können, beispielsweise mit Heu. Dies kann zum Beispiel morgens geschehen.

Die Trommel 1 wird anschließend so gedreht, dass sie nur mit einer der Kammern 7, 8, 9 in den Pferdebereich 18 hineinragt. Diese Kammer liegt dann im Fressbereich, wohingegen die beiden anderen Kammern im Vorhaltebereich liegen. Die Kammer im Fressbereich ist von den beiden Kammern im Vorhaltebereich stabil getrennt, nämlich durch die blechförmigen Trennwände.

Gleichzeitig ist die Trommel 1 dazu eingerichtet, die nächstfolgende Kammer, also das zweite Volumen und bei weiterem Drehen auch das dritte Volumen, in den Fressbereich hinein zu bewegen, nämlich einfach indem mechanisch die Trommel 1 gedreht wird.

Wenn die Trommel mit einem Netz 20 nach außen hin umgeben oder jedenfalls die einzelnen Kammern damit verschlossen sind, ist das Pferd gezwungen, das Heu oder das andere Futter durch die einzelnen Netzmaschen heraus zu rupfen. Es wird dadurch nochmals in seinem Fressen der natürlichen Ernährung angepasst.

Eine bevorzugte Ausführungsform sieht vor, dass für jede Öffnung zu einer Kammer zwischen zwei feststehenden Blechelementen ein einzelnes Netz 20 vorgesehen ist. Dieses ist bevorzugt auf einer Innenseite der Mantelfläche befestigt, hier konkret an einer Innenseite der beiden Blechstreifen 21, 22.

Es kann beispielsweise ein durchlaufendes Element wie beispielsweise ein Gummiseil oder ein anderes Seil am Netz umlaufen und hierfür eine Aufnahme an der Trommel 1 vorgesehen sein.

Bevorzugt sind relativ leicht mechanisch versagende Halteelemente vorgesehen, vor allem Kunststoffhalteelemente. Wenn ein Pferd beim Austreten mit einer Hufe im Netz verhakt, kann es durch einen kräftigen Ruck an der Hufe und somit am Netz die Hufe wieder befreien, ohne dass die Pferdefüttervorrichtung beschädigt wird. Das Netz kann anschließend einfach ausgetauscht oder repariert werden.

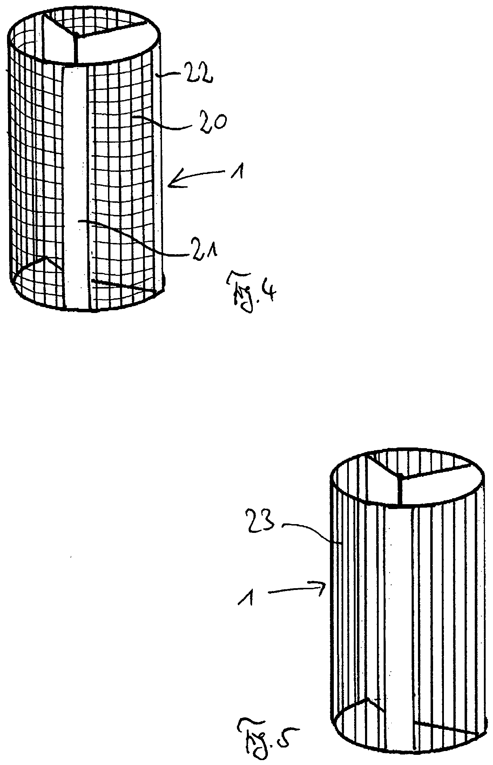

Die Gitterstäbe 23 in Fig. 5 haben eine ähnliche Funktion wie die Netzmaschen der Trommel 1 in Fig. 4. Netzmaschen werden aber für die Erfindung bevorzugt, weil die Pferde bei vertikal verlaufenden Gitterstäben 23 dazu tendieren, den Kopf beim gesamten Fressen seitlich geneigt zu halten, was sich negativ auf die Haltung und den Knochenapparat der Pferde auswirken kann.

## Patentansprüche

1. Pferdeboxenwand mit einer Pferdefüttervorrichtung, insbesondere Heuraufe, zum Verfüttern von Heu oder anderem Futter, wobei die Pferdefüttervorrichtung ein erstes Volumen und ein zweites Volumen aufweist, wobei das erste Volumen in einem Fressbereich liegt und das zweite Volumen in einem Vorhaltebereich liegt, wobei das erste Volumen vom zweiten Volumen stabil getrennt ist, sodass das Pferd im Fressbereich zum Fressen an Futter im ersten Volumen gelangt, dann aber nicht an Vorhaltefutter im zweiten Volumen gelangt, wobei eine Transporteinrichtung vorgesehen ist, welche ein Teil der Pferdefüttervorrichtung ist und welche dazu eingerichtet ist, das zweite Volumen mechanisch in den Fressbereich zu bewegen, insbesondere mit einem Motor, wobei der Fressbereich der Pferdefüttervorrichtung an der Pferdeboxenwand einer Pferdebox auf der Innenseite zum Boxeninneren hin liegt und der Vorhaltebereich nach außen von der Box weg gerichtet liegt, **dadurch gekennzeichnet, dass** die Transporteinrichtung dazu eingerichtet ist, das zweite Volumen nach der Bewegung in den Fressbereich hinein auch aus dem Fressbereich hinaus zu bewegen, insbesondere in den Vorhaltebereich hinein.

2. Pferdeboxenwand mit einer Pferdefüttervorrichtung nach Anspruch 1, ***dadurch gekennzeichnet, dass*** die Transporteinrichtung dazu eingerichtet ist, das erste Volumen aus dem Fressbereich hinaus zu bewegen, insbesondere in den Vorhaltebereich hinein.

3. Pferdeboxenwand mit einer Pferdefüttervorrichtung nach einem der vorhergehenden Ansprüche, ***dadurch gekennzeichnet, dass*** die Transporteinrichtung dazu eingerichtet ist, das erste Volumen gleichzeitig mit dem zweiten Volumen zu bewegen.

4. Pferdeboxenwand mit einer Pferdefüttervorrichtung nach einem der vorhergehenden Ansprüche, ***dadurch gekennzeichnet, dass*** das erste Volumen und das zweite Volumen mechanisch gegeneinander fixiert sind, bevorzugt eine gemeinsame Wandung aufweisen.

5. Pferdeboxenwand mit einer Pferdefüttervorrichtung nach einem der vorhergehenden Ansprüche, ***dadurch gekennzeichnet, dass*** ein drittes Volumen vorgesehen ist, welches im Vorhaltebereich angeordnet ist, wenn das erste Volumen im Fressbereich angeordnet ist.

6. Pferdeboxenwand mit einer Pferdefüttervorrichtung nach einem der vorhergehenden Ansprüche, ***dadurch gekennzeichnet, dass*** die Volumina in einer Trommel angeordnet sind, insbesondere mit radial angeordneten Trennwänden.

7. Pferdeboxenwand mit einer Pferdefüttervorrichtung nach einem der vorhergehenden Ansprüche, ***dadurch gekennzeichnet, dass*** eine Drehlagerung mit einer Achse vorgesehen ist, um welche die Volumina drehbar in der Pferdefüttervorrichtung gehalten sind.

8. Pferdeboxenwand mit einer Pferdefüttervorrichtung nach einem der vorhergehenden Ansprüche, ***dadurch gekennzeichnet, dass*** die Volumina von einem Netz oder Gitter umgeben oder zu einer Außenseite hin geschützt sind.

9. Pferdeboxenwand mit einer Pferdefüttervorrichtung nach einem der vorhergehenden Ansprüche, ***dadurch gekennzeichnet, dass*** eine Zugabeeinrichtung mit einem Zugabespeicher vorgesehen ist.

10. Verfahren zum Füttern eines Pferdes mittels einer Pferdeboxenwand mit einer Pferdefüttervorrichtung nach einem der Ansprüche 1 bis 9, mit den Schritten
a. Befüllen des ersten Volumens mit Futter;
b. Befüllen des zweiten Volumens mit Futter;
c. Bereitstellen des Futters im ersten Volumen im Fressbereich, unter Zurückhalten des zweiten Volumens im Vorhaltebereich;
d. Bereitstellen des Futters im zweiten Volumen im Fressbereich;
wobei die Schritte b und c sowie die Schritte a und b ihre Reihenfolge wechseln können, aber bevorzugt zunächst die Schritte a und b gemeinsam durchgeführt werden.

## Claims

1. A horsebox wall comprising a horse feeding device, in particular hayrack, for feeding hay or other food, wherein the horse feeding device has a first volume and a second volume, wherein the first volume lies in a feeding area and the second volume lies in a storage area, wherein the first volume is separated from the second volume in a stable manner, so that the horse can get to food in the first volume in the feeding area for feeding, but then does not get to storage food in the second volume, wherein a transport means is provided, which is a part of the horse feeding device and which is configured to mechanically move the second volume into the feeding area, in particular by means of a motor, wherein the feeding area of the horse feeding device lies on the horsebox wall of a horsebox on the inner side towards the box interior, and the storage area lies directed away from the box to the outside, ***characterized in that*** the transport means is configured to also move the second volume out of the feeding area, in particular into the storage area, after the movement into the feeding area.

2. The horsebox wall comprising a horse feeding device according to claim 1, ***characterized in that*** the transport means is configured to move the first volume out of the feeding area, in particular into the storage area.

3. The horsebox wall comprising a horse feeding device according to one of the preceding claims, ***characterized in that*** the transport means is configured to move the first volume simultaneously with the second volume.

4. The horsebox wall comprising a horse feeding device according to one of the preceding claims, ***characterized in that*** the first volume and the second volume are mechanically fixed against each other, preferably have a common wall.

5. The horsebox wall comprising a horse feeding device according to one of the preceding claims, ***characterized in that*** a third volume is provided, which is arranged in the storage area when the first volume is arranged in the feeding area.

6. The horsebox wall comprising a horse feeding device according to one of the preceding claims, ***characterized in that*** the volumes are arranged in a drum, in particular comprising radially arranged separating walls.

7. The horsebox wall comprising a horse feeding device according to one of the preceding claims, ***characterized in that*** a rotational mounting comprising an axis is provided, about which the volumes are rotatably held in the horse feeding device.

8. The horsebox wall comprising a horse feeding device according to one of the preceding claims, ***characterized in that*** the volumes are surrounded or are protected towards an outer side by a net or mesh.

9. The horsebox wall comprising a horse feeding device according to one of the preceding claims, ***characterized in that*** an adding means comprising an adding reservoir is provided.

10. A method for feeding a horse by means of a horsebox wall comprising a horse feeding device according to one of claims 1 to 9, comprising the steps of
a. filling the first volume with food;
b. filling the second volume with food;
c. providing the food in the first volume in the feeding area, by holding back the second volume in the storage area;
d. providing the food in the second volume in the feeding area;
wherein steps b and c as well as steps a and b can change their order, but steps a and b are initially preferably performed jointly.

## Revendications

1. Paroi de box à chevaux, dotée d'une mangeoire pour chevaux, notamment d'un râtelier, pour dispenser du foin ou un autre fourrage, la mangeoire comportant un premier volume et un deuxième volume, le premier volume se situant dans une zone d'alimentation et le deuxième volume se situant dans une zone de réserve, le premier volume étant solidement séparé du deuxième volume, de sorte que pour se nourrir de fourrage, dans la zone d'alimentation, le cheval accède au premier volume, mais pas au fourrage de réserve dans le deuxième volume, un système de transport étant prévu qui est une partie de la mangeoire pour chevaux et qui est aménagé pour déplacer mécaniquement le deuxième volume dans la zone d'alimentation, notamment à l'aide d'un moteur, la zone d'alimentation de la mangeoire se situant sur la paroi de box à chevaux d'un box à chevaux, sur la face interne de l'intérieur du box et la zone de réserve étant située vers l'extérieur, en s'éloignant du box, ***caractérisée en ce que*** le système de transport est aménagé pour, après l'avoir déplacé à l'intérieur de la zone d'alimentation, également déplacer le deuxième volume hors de la zone d'alimentation, notamment à l'intérieur de la zone de réserve.

2. Paroi de box à chevaux, dotée d'une mangeoire pour chevaux selon la revendication 1, ***caractérisée en ce que*** le système de transport est aménagé pour déplacer le premier volume hors de la zone d'alimentation, notamment à l'intérieur de la zone de réserve.

3. Paroi de box à chevaux, dotée d'une mangeoire pour chevaux selon l'une quelconque des revendications précédentes, ***caractérisée en ce que*** le système de transport est aménagé pour déplacement le premier volume simultanément avec le deuxième volume.

4. Paroi de box à chevaux, dotée d'une mangeoire pour chevaux selon l'une quelconque des revendications précédentes, ***caractérisée en ce que*** le premier volume et le deuxième volume sont mécaniquement fixés l'un contre l'autre, présentent de préférence une cloison commune.

5. Paroi de box à chevaux, dotée d'une mangeoire pour chevaux selon l'une quelconque des revendications précédentes, ***caractérisée en ce qu***'il est prévu un troisième volume, lequel est placé dans la zone de réserve, lorsque le premier volume est placé dans la zone d'alimentation.

6. Paroi de box à chevaux, dotée d'une mangeoire pour chevaux selon l'une quelconque des revendications précédentes, ***caractérisée en ce que*** les volumes sont placés dans un tambour, notamment pourvu de parois de séparation placées en direction radiale.

7. Paroi de box à chevaux, dotée d'une mangeoire pour chevaux selon l'une quelconque des revendications précédentes, ***caractérisée en ce qu***'il est prévu un coussinet de pivotement pourvu d'un axe, autour duquel les volumes sont maintenus de manière rotative dans la mangeoire pour chevaux.

8. Paroi de box à chevaux, dotée d'une mangeoire pour chevaux selon l'une quelconque des revendications précédentes, ***caractérisée en ce que*** les volumes sont entourés d'un filet ou d'un grillage, ou sont protégés en direction d'une face extérieure.

9. Paroi de box à chevaux, dotée d'une mangeoire pour chevaux selon l'une quelconque des revendications précédentes, ***caractérisée en ce qu***'il est prévu un système d'ajout, pourvu d'un accumulateur d'ajout.

10. Procédé destiné à alimenter des chevaux à l'aide d'une paroi de box à chevaux selon l'une quelconque des revendications 1 à 9, comportant les étapes consistant à :
a. remplir le premier volume de fourrage ;
b. remplir le deuxième volume de fourrage ;
c. mettre à disposition le fourrage dans un premier volume, dans la zone d'alimentation, en retenant le deuxième volume dans la zone de réserve ;
d. mettre à disposition le fourrage dans le deuxième volume, dans la zone
d'alimentation ; les étapes b et c, ainsi que les étapes a et b étant susceptibles de changer dans leur ordre chronologique, mais dans un premier temps, les étapes a et b étant d'abord réalisées conjointement.
